# EUROPÄISCHE PATENTSCHRIFT

(11) **EP 3 292 735 B1**
(45) Veröffentlichungstag und Bekanntmachung des Hinweises auf die Patenterteilung: **09.06.2021**
(21) Anmeldenummer: 16715281.8
(22) Anmeldetag: 04.04.2016
(51) Int. Cl.: H04W 48/18, H04W 88/06, H04W 4/44, H04W 4/80, H04W 76/15, H04W 24/04, H04L 29/08

(54) **VORRICHTUNG, FAHRZEUG UND VERFAHREN ZUR KONTROLLE EINES DATENVERKEHRS MIT KOMPONENTEN EINES KRAFTFAHRZEUGS IN EINEM KRAFTFAHRZEUG**
DEVICE, MOTOR VEHICLE AND METHOD FOR CONTROLLING DATA TRAFFIC WITH COMPONENTS OF A MOTOR VEHICLE IN A MOTOR VEHICLE
DISPOSITIF, VEHICULE A MOTEUR ET PROCEDE DE COMMANDE DU TRAFIC DE DONNEES AVEC DES COMPOSANTS D'UN VEHICULE A MOTEUR DANS UN VEHICULE A MOTEUR

(30) Priorität: 05.05.2015 DE 102015208242
(43) Veröffentlichungstag der Anmeldung: 14.03.2018
(73) Patentinhaber: Volkswagen Aktiengesellschaft, 38440 Wolfsburg (DE)
(72) Erfinder: SIMSEK, Burak, 38112 Braunschweig (DE)
(86) Internationale Anmeldenummer: PCT/EP2016/057363
(87) Internationale Veröffentlichungsnummer: WO 2016/177521

(56) Entgegenhaltungen:
- DE-A1-102005 027 018
- US-A1- 2008 101 278
- US-A1- 2008 268 838
- US-A1- 2009 227 272
- US-A1- 2013 076 493

## Beschreibung

Ausführungsbeispiele betreffen eine Vorrichtung zur Kontrolle eines Datenverkehrs mit Komponenten eines Kraftfahrzeugs gemäß Anspruch 1, ein Kraftfahrzeug gemäß Anspruch 11 sowie ein Verfahren zur Kontrolle eines Datenverkehrs mit Komponenten eines Kraftfahrzeugs gemäß Anspruch 12.

Digitale Daten und Medien gewinnen mehr und mehr an Bedeutung. Auch im Bereich der Kraftfahrzeuge dringen digitale Daten in immer weitere Bereiche vor, bei der Steuerung von Fahrzeugkomponenten, wie z.B. bei der Motorsteuerung, bei der Navigation, beispielsweise in Form von Kartenmaterial und dessen Aktualisierungen, bei der Sicherheit, z.B. in Form von Verkehrsinformation und Verschleißdetektion, aber im Unterhaltungsbereich in Form von Mediadaten wie Audio- und Videodaten. Dabei kann es je nach Verwendung der Daten auch zur Übertragung von größeren Datenmengen kommen, beispielsweise bei Programmaktualisierungen, Kartenaktualisierungen, abonnierten Mediadiensten usw. Gleichzeitig erhöht sich die Vielfältigkeit der zur Verfügung stehenden Datendienste, beispielsweise stehen mittlerweile vielerlei Mobilfunkdienste und Schnittstellen zur Verfügung, über die sich digitale Daten übertragen lassen. Dabei stellen die verschiedenen Übertragungsmöglichkeiten verschiedene Charakteristiken bereit, die sich hinsichtlich der Verfügbarkeit, der Übertragungsrate, der Kosten und hinsichtlich der Zugrifftechnologie unterscheiden.

Einige weitere Beispiele gehen aus den folgenden Dokumenten hervor:
US2014/0236333 A1, worin ein Verfahren zum Empfang von Mediadaten beschrieben wird,
US2014/0185457 A1, welches einen Signalisierungsmechanismus offenbart, und
DE 10 2011 055 821 A1, das ein Verfahren zum Zwischenspeichern von Mediainhalten in einen Netzwerk beschreibt.

US 2008/268838 A1 lehrt ein System zur Bereitstellung mobiler interaktiver Satellitendienste umfassend einen Satelliten, der mit mobilen Einheiten kommunizieren kann, eine terrestrische Basis-Sendeempfängerstation, die mit mobilen Einheiten kommunizieren kann, und eine Bodenstation in Kommunikation mit dem Satelliten und der terrestrischen Basis-Sendeempfängerstation, um mobile interaktive Satelliten bereitzustellen.

US 2009/227272 A1 lehrt ein Verfahren und ein System zur Datenübertragung mit mobilen Netzwerkknoten, die mindestens zwei Netzwerkschnittstellen mit entsprechendem Stromverbrauch enthalten. Eine zentrale Einheit ist konfiguriert, um Daten zu empfangen, die für das mobile Netzwerk bestimmt sind, und eine erste Netzwerkschnittstelle des mobilen Netzwerkknotens ist deaktiviert.

Es besteht daher der Bedarf ein verbessertes Konzept zur Kontrolle einer Datenübertragung und zur Kontrolle eines Datenverkehrs mit einem Fahrzeug bereitzustellen.

Diesem Bedarf wird durch eine Vorrichtung zur Kontrolle eines Datenverkehrs mit Komponenten eines Kraftfahrzeugs gemäß Anspruch 1, ein Kraftfahrzeug gemäß Anspruch 11 sowie ein Verfahren zur Kontrolle eines Datenverkehrs mit Komponenten eines Kraftfahrzeugs gemäß Anspruch 12 Rechnung getragen

Die Erfindung wird durch den Gegenstand der unabhängigen Patentansprüche definiert. Vorteilhafte Weiterbildungen sind den abhängigen Ansprüchen zu entnehmen.

Ausführungsbeispiele basieren auf der Erkenntnis, dass verschiedene Schnurlossysteme mit verschiedenen Verfügbarkeiten oder Abdeckungsgraden zur Verfügung stehen. Dabei bieten einige Funksysteme größere Abdeckungsbereiche, so dass diese sich eignen eine Information über zu übertragende Daten zu übermitteln. Andere Funksysteme, die beispielsweise geringere Reichweiten oder Abdeckungsgrade haben, eignen sich häufig besser für die Übertragung größerer Datenmengen, z.B. da diese über größere Kapazitäten oder Bandbreiten verfügen, oftmals ist die Nutzung dieser Systeme auch kostengünstiger. Ausführungsbeispiele nutzen daher ein erstes Funksystem, um Komponenten eines Kraftfahrzeugs eine gewünschte Datenübertragung anzuzeigen und ein anderes Funksystem, um die eigentliche Datenübertragung durchzuführen.

Ausführungsbeispiele schaffen eine Vorrichtung zur Kontrolle eines Datenverkehrs mit Komponenten eines Kraftfahrzeugs in einem Kraftfahrzeug, die im Folgenden auch Fahrzeugvorrichtung genannt wird. Die Fahrzeugvorrichtung umfasst ein oder mehreren Schnittstellen, die ausgebildet sind, um mit wenigstens einem Sendeempfänger eines ersten Funksystems und um wenigstens mit einem Sendeempfänger eines zweiten Funksystems zu kommunizieren. Die Vorrichtung umfasst ferner ein Kontrollmodul, das ausgebildet ist, um über die ein oder mehreren Schnittstellen und das erste Funksystem eine Information über eine Datenübertragung zu empfangen, und um die Datenübertragung über die ein oder mehreren Sendeempfänger und über das zweite Funksystem zu veranlassen.

Ausführungsbeispiele schaffen darüber hinaus ein Kraftfahrzeug mit einem Ausführungsbeispiel einer solchen Vorrichtung. Ein dem Verständnis der Erfindung dienendes Beispiel stellt ferner eine Vorrichtung für eine Netzwerkkomponente zur Kontrolle einer Datenübertragung an zumindest eine Komponente eines Kraftfahrzeugs bereit, die im Folgenden auch Netzwerkvorrichtung genannt wird. Diese Vorrichtung umfasst zumindest eine Schnittstelle, die ausgebildet ist, um mit zumindest einer anderen Netzwerkkomponente zu kommunizieren, und ein Kontrollmodul, das ausgebildet ist, um über die zumindest eine Schnittstelle Information über eine Anforderung einer Datenübertragung an das Kraftfahrzeug zu erhalten, und um über die zumindest eine Schnittstelle eine Übertragung einer Information über die Anforderung über ein Funksystem an das Kraftfahrzeug zu übertragen.

Ausführungsbeispiele können somit ein Konzept zur effektiveren Datenübertragung an ein Kraftfahrzeug breitstellen. Eine Anforderung einer solchen Datenübertragung kann beispielsweise über eine Netzwerkkomponente veranlasst werden, z.B. eine Aktualisierung von Mediadaten oder Kontrolldaten in einem Fahrzeug. Die Netzwerkkomponente kann dann über übliche Mechanismen erreichbar sein, beispielsweise durch einen Nutzer des Kraftfahrzeugs, einen Hersteller des Kraftfahrzeugs oder einen Komponentenhersteller des Kraftfahrzeugs. Über ein erstes Funksystem kann dann dieser Bedarf an das Kraftfahrzeug übermittelt werden. Vom Kraftfahrzeug kann, ggf. bei Gelegenheit, eine Verbindung zu einem zweiten Funksystem aufgebaut und die Daten übertragen werden.

In manchen Ausführungsbeispielen der Fahrzeugvorrichtung können die ein oder mehreren Schnittstellen ferner ausgebildet sein, um mit einer Kontrolleinrichtung des Kraftfahrzeugs zu kommunizieren, wobei das Kontrollmodul ausgebildet ist, um übertragene Daten an die Kontrolleinrichtung des Fahrzeugs zu übertragen. Insofern kann die Fahrzeugvorrichtung eine Koordination mit einer Kontrolleinrichtung, z.B. mit einem Steuergerät einem Mediengerät (z.B. Display-Einheit, Bordcomputer, o.ä.), des Fahrzeugs ermöglichen. Beispielsweise kann somit ein Zuschalten von anderen Fahrzeugkomponenten erwirkt werden, wenn die Datenübertragung erfolgt.

Das Kontrollmodul der Fahrzeugvorrichtung ist ausgebildet, um, in einem ausgeschalteten Zustand des Kraftfahrzeugs, die Sendeempfänger über die ein oder mehreren Schnittstellen bzgl. des ersten Funksystems in einen empfangsbereiten Zustand zu versetzen und bzgl. des zweiten Funksystems in einen Ruhemodus oder einen ausgeschalteten Zustand zu versetzen. So werden Energieersparnisse bei gleichzeitiger Erreichbarkeit ermöglicht, beispielsweise kann ein Energieverbrauch bei gleichzeitiger Empfangsbereitschaft reduziert werden. Der Sendeempfänger des zweiten Funksystems, beispielsweise mit größerer Übertragungsrate und höherem Energieverbrauch, kann dann bei Bedarf und/oder Verfügbarkeit zuschaltbar sein.

Das Kontrollmodul ist darüber hinaus ausgebildet, um in dem ausgeschalteten Zustand des Kraftfahrzeugs, einen Ladezustand eines Energiespeichers zu überwachen und die Sendeempfänger über die ein oder mehreren Schnittstellen bzgl. des ersten, zweiten oder beiden Funksystemen in einen empfangsbereiten Zustand zu versetzen, wenn eine Mindestladung in dem Energiespeicher vorhanden ist. Insofern wird in manchen Ausführungsbeispielen eine Überwachung beispielsweise einer Batterie des Fahrzeugs erfolgen und die Datenübertragung und/oder ggf. auch die Empfangsbereitschaft der Sendeempfänger abhängig von einem Ladezustand der Batterie gemacht werden. Wenn z.B. ein vordefinierter Mindestladezustand der Batterie nicht vorliegt, kann daher die Datenübertragung unterbleiben, bzw. auch die Empfangsbereitschaft bzgl. der Information über die Datenübertragung unterbunden werden, um den Ladezustand der Batterie nicht weiter zu verschlechtern. Etwaige Datenübertragungsversuche oder Aufwachvorgänge zur Datenübertragung können dann erfolgen, wenn der Ladezustand des Energiespeichers über einer gewissen Schwelle liegt.

Beispielsweise kann das Kontrollmodul in einigen Ausführungsbeispielen ausgebildet sein, um die Information über die Datenübertragung in Form einer Kurznachricht (auch engl. Short Message Service, SMS) über das erste Funksystem zu empfangen. In analoger Weise kann das Kontrollmodul der Netzwerkvorrichtung ausgebildet sein, um die Information über die Anforderung der Datenübertragung in Form einer Kurznachricht über das erste Funksystem zu übertragen. Insofern kann die Übertragung der Information aufwandsgünstig und weitgehend flächendeckend durchgeführt werden. Das erste Funksystem kann z. B. einem Global System for Mobile communication (GSM - ein Mobilfunkstandard der zweiten Generation) entsprechen. Das zweite Funksystem kann beispielsweise einem Wireless Local Area Network (WLAN - ein Standard nach IEEE 802.11 der zur kurzreichweitigen Anbindung zumeist in Heimnetzwerken entwickelt wurde) entsprechen. Insofern kann beispielsweise eine Datenübertragung in einem WLAN-Netzwerk durch eine SMS angestoßen werden. Ausführungsbeispiele können beispielsweise ein automatisiertes Einbuchen oder Einschalten eines WLAN-Sendeempfägers erst nach Erhalt einer solchen SMS vorsehen.

In weiteren Ausführungsbeispielen kann die Datenübertragung eine Übertragung von Aktualisierungsdaten für eine Komponente des Fahrzeugs, z.B. Programm-, Software-, oder Firmware-Aktualisierungen, Mediadaten für ein Medienabspielsystem des Kraftfahrzeugs, z.B.

Audio, Video, oder Kontrolldaten eines Herstellers des Kraftfahrzeugs oder eines Herstellers von Kraftfahrzeugkomponenten umfassen. Insofern können beispielsweise abonnierte Mediendienste eines Nutzers über WLAN, z.B. über Nacht auf dem heimischen Parkplatz, aktualisiert werden. Die zumindest eine Schnittstelle der Netzwerkvorrichtung kann dann ausgebildet sein, um die Information über die Anforderung von einem Nutzer des Kraftfahrzeugs, von einem Komponentenhersteller des Kraftfahrzeugs, oder von einem Hersteller des Kraftfahrzeugs zu erhalten.

Das Kontrollmodul der Fahrzeugvorrichtung ist ausgebildet, um, nach Erhalt der Information über die Datenübertragung (z.B. per SMS), über die ein oder mehreren Schnittstellen den Sendeempfänger für das zweite Funksystem (z.B. WLAN) in einen empfangsbereiten Zustand zu versetzen, zu überprüfen, ob Datenübertragungsdienste über das zweite Funksystem (z.B. WLAN) verfügbar sind, und die Datenübertragung zu veranlassen, wenn Datenübertragungsdienste über das zweite Funksystem verfügbar sind. Insofern können Ausführungsbeispiele die Übertragung von Daten aufwandgünstig erlauben. Das Kontrollmodul der Fahrzeugvorrichtung ist ferner ausgebildet, um, wenn Datenübertragungsdienste über das zweite Funksystem nicht verfügbar sind und zumindest wenn sich das Kraftfahrzeug im ausgeschalteten Zustand befindet, über die ein oder mehreren Schnittstellen den Sendeempfänger für das zweite Funksystem wieder in den Ruhemodus oder den ausgeschalteten Zustand zu versetzen, und zu einem späteren Zeitpunkt eine Verfügbarkeit von Datenübertragungsdiensten in dem zweiten Funksystem erneut zu überprüfen, die Datenübertragung zu veranlassen, wenn Datenübertragungsdienste über das zweite Funksystem verfügbar sind. Ausführungsbeispiele können somit für Datenübertragungen die eine gewisse Verzögerungstoleranz aufweisen die Möglichkeit bieten, ein günstige Gelegenheit zur Übertragung abzuwarten.

Beispielsweise kann das Kontrollmodul ausgebildet sein, um den späteren Zeitpunkt basierend auf einem vordefinierten Zeitraum zu wählen, z.B. kann so eine regelmäßige Verfügbarkeitsprüfung stattfinden. In manchen Ausführungsbeispielen ist das Kontrollmodul ausgebildet, um den späteren Zeitpunkt basierend auf einer Verfügbarkeitsinformation zu wählen. Beispielsweise kann diese Information einen Ort oder eine Zeit angeben, zu dem eine Verfügbarkeitswahrscheinlichkeit des zweiten Funksystems über einer gewissen Schwelle liegt. Z.B kann die Fahrzeugvorrichtung ferner ein Speichermodul umfassen, wobei das Kontrollmodul ausgebildet ist, um über das Speichermodul Information über eine zeitliche und/oder örtliche Verfügbarkeit der Datenübertragung in dem zweiten Funksystem als Verfügbarkeitsinformation zu speichern. Insofern können Ausführungsbeispiele auch eine gewisse Lernfähigkeit über die Verfügbarkeit des zweiten Funksystems ermöglichen, sodass die Information über den zweiten Zeitpunkt aus einer Verfügbarkeitshistorie heraus bestimmbar wird.

Das Kontrollmodul kann in weiteren Ausführungsbeispielen ausgebildet sein, um über das erste oder das zweite Funksystem Information bezüglich des Status der Datenübertragung an eine Netzwerkkomponente zu übertragen. In einem solchen Ausführungsbeispiel kann als Statusinformation beispielsweise über eines der Funksysteme mitgeteilt werden, ob eine Information über eine Datenübertragung empfangen wurde, welche Funksysteme verfügbar sind, insbesondere ob das zweite Funksystem verfügbar ist, ob die Datenübertragung abgeschlossen wurde, ob ein Versuch der Datenübertragung z.B. mangels Verfügbarkeit des zweiten Funksystems gescheitert ist, oder ob ein Datenübertragungsversuch wiederholt wird etc. Ausführungsbeispiele können so eine Kontrolle oder Überwachung der Datenübertragung durch die Netzwerkkomponente ermöglichen.

Ausführungsbeispiele schaffen ferner ein Verfahren zur Kontrolle eines Datenverkehrs mit Komponenten eines Kraftfahrzeugs in einem Kraftfahrzeug. Das Verfahren umfasst ein Kommunizieren mit wenigstens einem Sendeempfänger eines ersten Funksystems und ein Kommunizieren mit wenigstens einem Sendeempfänger eines zweiten Funksystems. Das Verfahren umfasst ferner ein Empfangen einer Information über eine Datenübertragung über das erste Funksystem und ein Veranlassen der Datenübertragung über das zweite Funksystem.

Ein dem Verständnis der Erfindung dienendes Beispiel schafft darüber hinaus ein Verfahren für eine Netzwerkkomponente zur Kontrolle einer Datenübertragung an zumindest eine Komponente eines Kraftfahrzeugs. Das Verfahren umfasst ein Kommunizieren mit einer anderen Netzwerkkomponente und ein Erhalten von Information über eine Anforderung einer Datenübertragung an ein Kraftfahrzeug. Das Verfahren umfasst ferner ein Übertragen einer Information über die Anforderung über ein Funksystem an das Kraftfahrzeug.

Ein dem Verständnis der Erfindung dienendes Beispiel schafft ferner ein Computerprogramm mit einem Programmcode zum Durchführen des Verfahrens, wenn der Programmcode auf einem Computer, einem Prozessor, einem Controller oder einer programmierbaren Hardwarekomponente ausgeführt wird. Ausführungsbeispiele schaffen auch ein digitales Speichermedium, das maschinen- oder computerlesbar ist, und das elektronisch lesbare Steuersignale aufweist, die mit einer programmierbaren Hardwarekomponente so zusammenwirken können, dass eines der oben beschriebenen Verfahren ausgeführt wird.

### Figurenkurzbeschreibung

Weitere vorteilhafte Ausgestaltungen werden nachfolgend anhand der in den Zeichnungen dargestellten Ausführungsbeispiele, auf welche Ausführungsbeispiele generell jedoch nicht insgesamt beschränkt sind, näher beschrieben. Es zeigen:
Fig. 1 ein Blockdiagramm eines Ausführungsbeispiels einer Vorrichtung zur Kontrolle eines Datenverkehrs mit Komponenten eines Kraftfahrzeugs, ein Blockdiagramm eines Ausführungsbeispiels einer Vorrichtung für eine Netzwerkkomponente und ein Blockdiagramm eines Ausführungsbeispiels eines Fahrzeugs;
Fig. 2 ein Ausführungsbeispiel in einem Szenario außerhalb einer Reichweite eines zweiten Funksystems zu einem ersten Zeitpunkt und innerhalb der Reichweite des zweiten Funksystems zu einem zweiten späteren Zeitpunkt;
Fig. 3 ein Blockdiagramm eines Ausführungsbeispiels eines Verfahrens zur Kontrolle eines Datenverkehrs oder einer Datenübertragung;
Fig. 4 ein Blockdiagramm eines Ausführungsbeispiels eines Verfahrens zur Kontrolle eines Datenverkehrs mit Komponenten eines Kraftfahrzeugs; und
Fig. 5 ein Blockdiagramm eines Ausführungsbeispiels eines Verfahrens für eine Netzwerkkomponente.

### Beschreibung

Verschiedene Ausführungsbeispiele werden nun ausführlicher unter Bezugnahme auf die beiliegenden Zeichnungen beschrieben, in denen einige Ausführungsbeispiele dargestellt sind. In den Figuren können die Dickenabmessungen von Linien, Schichten und/oder Regionen um der Deutlichkeit Willen übertrieben dargestellt sein.

Bei der nachfolgenden Beschreibung der beigefügten Figuren, die lediglich einige exemplarische Ausführungsbeispiele zeigen, können gleiche Bezugszeichen gleiche oder vergleichbare Komponenten bezeichnen. Ferner können zusammenfassende Bezugszeichen für Komponenten und Objekte verwendet werden, die mehrfach in einem Ausführungsbeispiel oder in einer Zeichnung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

Obwohl Ausführungsbeispiele auf verschiedene Weise modifiziert und abgeändert werden können, sind Ausführungsbeispiele in den Figuren als Beispiele dargestellt und werden hierin ausführlich beschrieben. Es sei jedoch klargestellt, dass nicht beabsichtigt ist, Ausführungsbeispiele auf die jeweils offenbarten Formen zu beschränken, sondern dass Ausführungsbeispiele vielmehr sämtliche funktionale und/oder strukturelle Modifikationen, Äquivalente und Alternativen, die im Bereich der Erfindung liegen, abdecken sollen. Gleiche Bezugszeichen bezeichnen in der gesamten Figurenbeschreibung gleiche oder ähnliche Elemente.

Man beachte, dass ein Element, das als mit einem anderen Element "verbunden" oder "verkoppelt" bezeichnet wird, mit dem anderen Element direkt verbunden oder verkoppelt sein kann oder dass dazwischenliegende Elemente vorhanden sein können. Wenn ein Element dagegen als "direkt verbunden" oder "direkt verkoppelt" mit einem anderen Element bezeichnet wird, sind keine dazwischenliegenden Elemente vorhanden. Andere Begriffe, die verwendet werden, um die Beziehung zwischen Elementen zu beschreiben, sollten auf ähnliche Weise interpretiert werden (z.B., "zwischen" gegenüber "direkt dazwischen", "angrenzend" gegenüber "direkt angrenzend" usw.).

Die Terminologie, die hierin verwendet wird, dient nur der Beschreibung bestimmter Ausführungsbeispiele und soll die Ausführungsbeispiele nicht beschränken. Wie hierin verwendet, sollen die Singularformen "einer," "eine", "eines" und "der, die, das" auch die Pluralformen beinhalten, solange der Kontext nicht eindeutig etwas anderes angibt. Ferner sei klargestellt, dass die Ausdrücke wie z.B. "beinhaltet", "beinhaltend", "aufweist", "umfasst", "umfassend" und/oder "aufweisend", wie hierin verwendet, das Vorhandensein von genannten Merkmalen, ganzen Zahlen, Schritten, Arbeitsabläufen, Elementen und/oder Komponenten angeben, aber das Vorhandensein oder die Hinzufügung von einem bzw. einer oder mehreren Merkmalen, ganzen Zahlen, Schritten, Arbeitsabläufen, Elementen, Komponenten und/oder Gruppen davon nicht ausschließen.

Solange nichts anderes definiert ist, haben sämtliche hierin verwendeten Begriffe (einschließlich von technischen und wissenschaftlichen Begriffen) die gleiche Bedeutung, die ihnen ein Durchschnittsfachmann auf dem Gebiet, zu dem die Ausführungsbeispiele gehören, beimisst. Ferner sei klargestellt, dass Ausdrücke, z.B. diejenigen, die in allgemein verwendeten Wörterbüchern definiert sind, so zu interpretieren sind, als hätten sie die Bedeutung, die mit ihrer Bedeutung im Kontext der einschlägigen Technik konsistent ist, und nicht in einem idealisierten oder übermäßig formalen Sinn zu interpretieren sind, solange dies hierin nicht ausdrücklich definiert ist.

Fahrzeuge verfügen mittlerweile über eine Mehrzahl von Kommunikationsschnittstellen und Verfahren, die sowohl schnurgebunden als auch schnurlos ausgebildet sein können. Typische verfügbare Schnurlosnetze verwenden Funknetze verschiedener Mobilfunkstandards, die zellular aufgebaut sein können. Im Heimnetzbereich und dort wo ein begrenzter Abdeckungsbereich der Schnurlosdienste als ausreichend erachtet wird finden sich auch Funknetze, die nach den Standards für Heimnetzwerke implementiert werden. Problematisch bei Fahrzeugen, die WLAN verwenden, kann der Energiebedarf des WLAN-Sendeempfängers sein, der zumindest bei längerem Betrieb die Batterie entladen würde, wenn das Fahrzeug dabei abgestellt ist. Insofern könnte eine Verwendung von WLAN zu Aktualisierungszwecken als kritisch angesehen werden. Durch ein Zuschalten des WLAN als zweites Funksystem, wobei eine Datenübertragung zuvor über ein erstes Funksystem angezeigt wurde können zumindest manche Ausführungsbeispiele dieses Problem vermindern. Insofern können Ausführungsbeispiele ein batterieschonendes Konzept zur Verwendung von WLAN zur Datenübertragung an Kraftfahrzeuge schaffen.

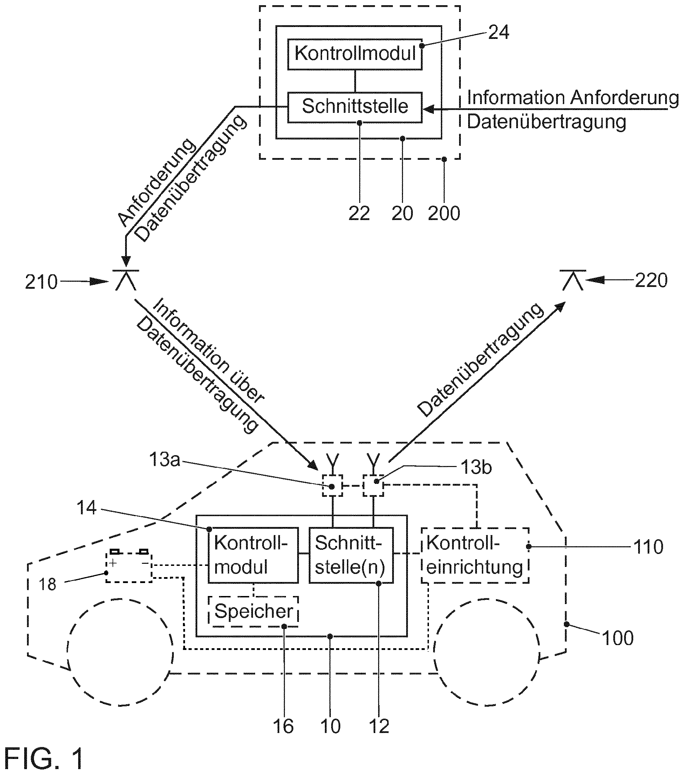

Fig. 1 zeigt ein Blockdiagramm eines Ausführungsbeispiels einer Vorrichtung 10 zur Kontrolle eines Datenverkehrs mit Komponenten eines Kraftfahrzeugs 100. Optionale Komponente sind in den folgenden Figuren mit gestrichelten Linien dargestellt. Hier und im Folgenden sei unter Kraftfahrzeug prinzipiell ein beliebiges Fahrzeug verstanden, z.B. ein Bus, ein Lastkraftwagen, ein Auto, ein Zweirad, ein Luftfahrzeug, ein Landfahrzeug, ein Wasserfahrzeug usw., da Ausführungsbeispiele prinzipiell in beliebigen Kraftfahrzeugen genutzt werden können. Die Fahrzeugvorrichtung 10 umfasst ein oder mehreren Schnittstellen 12, die ausgebildet sind, um mit wenigstens einem Sendeempfänger 13a eines ersten Funksystems 210 und um wenigstens mit einem Sendeempfänger 13b eines zweiten Funksystems 220 zu kommunizieren.

Die zumindest eine Schnittstelle 12 kann beispielsweise einem oder mehreren Eingängen und/oder einem oder mehreren Ausgängen zum Empfangen und/oder Übertragen von Informationen entsprechen, etwa in digitalen Bitwerten, basierend auf einem Code oder Protokoll, innerhalb eines Moduls, zwischen Modulen, oder zwischen Modulen verschiedener Entitäten. Insofern können die ein oder mehreren Schnittstellen 12 schnurlosen oder schnurgebundenen Schnittstellen entsprechen, die sich eignen entsprechende Information oder Informationen zu übertragen, ggf. unter Verwendung entsprechender Protokolle, z.B. das Internet-Protokoll (IP), das Ethernet-Protokoll, das Controller Area Network (CAN)- Protokoll, etc.

In dem in der Fig. 1 dargestellten Ausführungsbeispiel sind die Sendeempfänger 13a und 13b als physikalisch getrennte Empfänger dargestellt. In manchen Ausführungsbeispielen können diese auch gemeinsame Komponenten haben. Darüber hinaus können in manchen Ausführungsbeispielen ein oder auch beide Sendeempfänger mit in die Vorrichtung integriert sein.

Ausführungsbeispiele können daher von einem Sendeempfänger/Mobilfunkgerät Gebrauch machen, das zur Kommunikation von Daten über ein Mobilfunksystem mit einem Server oder Computer oder einem anderen Kommunikationspartner ausgebildet ist, der beispielsweise über Internet bzw. das World Wide Web (WWW) oder ein anderes Netz erreichbar ist. Das Mobilfunksystem kann beispielsweise einem der Mobilfunksysteme entsprechen, die von entsprechenden Standardisierungsgremien, wie z.B. der 3rd Generation Partnership Project (3GPP)-Gruppe, standardisiert werden. Beispielsweise umfassen diese das Global System for Mobile Communications (GSM), Enhanced Data Rates for GSM Evolution (EDGE), GSM EDGE Radio Access Network (GERAN), das Universal Terrestrial Radio Access Network (UTRAN) oder das Evolved UTRAN (E-UTRAN), wie z. B. das Universal Mobile Telecommunication System (UMTS), Long Term Evolution (LTE) oder LTE-Advanced (LTE-A), oder auch Mobilfunksysteme anderer Standards, wie z. B. das Worldwide Interoperability for Microwave Access (WIMAX), IEEE802.16 oder Wireless Local Area Network (WLAN), IEEE802.11, sowie generell ein System, das auf einem Zeitbereichsvielfachzugriffsverfahren (Time Division Multiple Access (TDMA)), Frequenzbereichsvielfachzugriffsverfahren (Frequency Division Multiple Access (FDMA)), Kodebereichsvielfachzugriffsverfahren (Code Division Multiple Access (CDMA)), orthogonalen Frequenzbereichsvielfachzugriffsverfahren (Orthogonal Frequency Division Multiple Access (OFDMA)) oder einer anderen Technologie bzw. Vielfachzugriffverfahren basiert. Im Folgenden werden die Begriffe Mobilfunksystem, Mobilfunknetz, mobiles Kommunikationssystem, Funksystem, Funknetz und Mobilfunknetzwerk synonym benutzt.

Das Funksystem 210, 220 weist ferner zumindest einen festen Basisstations-Sendeempfänger. Im Folgenden wird angenommen, dass ein solches Mobilfunksystem zumindest einen stationären Sendeempfänger im Sinne einer festen Basisstation umfasst, der über Anbindung an den leitungsgebundenen Teil des Mobilfunknetzes verfügt. Auf der anderen Seite wird davon ausgegangen, dass das Mobilfunknetz zumindest einen mobilen Sendeempfänger 13a, 13b (Mobilfunkendgerät) umfasst, wobei sich der Begriff mobil hier darauf beziehen soll, dass mit diesem Sendeempfänger über die Luftschnittstelle, d. h. kabellos/schnurlos, kommuniziert wird. Ein solcher mobiler Sendeempfänger kann beispielsweise einem tragbaren Telefon, einem Smartphone, einem Tablet-Computer, einem tragbaren Computer oder einem Funkmodul entsprechen, das nicht zwingend mobil in dem Sinne ist, als dass es sich tatsächlich gegenüber seiner Umgebung bewegt. Der Sendeempfänger kann auch stationär sein (z.B. relativ zu einem Kraftfahrzeug (KFZ)), mit dem Mobilfunknetz jedoch drahtlos kommunizieren. Insofern kann die bereits erwähnte Basisstation einer Basisstation einem der oben erwähnten Standards entsprechen, beispielsweise einer NodeB, einer eNodeB, einer Base Transceiver Station (BTS), usw.

Ein Basisstations-Sendeempfänger oder eine Basisstation (diese Begriffe können äquivalent verwendet werden) kann ausgebildet sein, um mit einem oder mehreren aktiven Mobilfunkgeräten (Sendeempfänger 13a, 13b) zu kommunizieren und um in oder benachbart zu einem Versorgungs- oder Abdeckungsbereich eines anderen Basisstations-Sendeempfängers oder einer Basisstation zu kommunizieren, z.B. als Makrozell-Basisstation oder als Kleinzell-Basisstation. Somit können Ausführungsformen ein Mobilkommunikationssystem mit einem oder mehreren Mobilfunkendgeräten und einer oder mehreren Basisstationen umfassen, wobei die Basisstations-Sendempfänger Makrozellen oder kleine Zellen bereitstellen können, z. B. Pico-, Metro- oder Femto-Zellen. Ein mobiler Sendeempfänger 13a, 13b oder Mobilfunkendgerät kann einem Smartphone (intelligentes Telefon), einem Handy, einem Benutzergerät, einem Funkgerät, einer Mobilen, einer Mobilstation, einem Laptop, einem Notebook, einem Personal Computer (PC), einem Personal Digital Assistant (PDA), einem Universal Serial Bus (USB)-Stick oder-Adapter, einem Auto, etc., entsprechen. Ein mobiler Sendeempfänger kann auch als engl. "User Equipment (UE)" oder Mobile im Einklang mit der 3GPP- Terminologie bezeichnet werden.

Ein Basisstations-Sendeempfänger oder eine Basisstation eines Funksystems 210, 220 kann zumindest aus der Sicht eines Mobilfunkendgerätes in einem feststehenden oder zumindest festverbundenen Teil des Netzwerks oder Systems befinden. Ein Basisstation-Sendeempfänger oder eine Basisstation kann auch einem Remote Radio Head, einer Relay-Station, einem Übertragungspunkt, einem Zugriffspunkt (auch engl. "Access Point"), einem Funkgerät, einer Makrozelle, einer kleinen Zelle, einer Mikrozelle, einer Femtozelle, einer Metrozelle usw. entsprechen. Eine Basisstation oder ein Basisstations-Sendeempfänger wird somit als logisches Konzept eines Knotens/einer Einheit zur Bereitstellung eines Funkträgers oder von Funkverbindungen über die Luftschnittstelle verstanden, über den oder die einem Endgerät/mobile Sendeempfänger Zugang zu einem Mobilfunknetz verschafft wird.

Eine Basisstation oder ein Basisstations-Sendeempfänger kann eine drahtlose Schnittstelle für Mobilfunkendgeräte zu einem verdrahteten Netzwerk darstellen. Die verwendeten Funksignale können durch 3GPP standardisierte Funksignale sein oder allgemein Funksignale in Übereinstimmung mit einer oder mehreren der oben genannten Systeme. So kann eine Basisstation oder ein Basisstations-Sendeempfänger einer NodeB, einer eNodeB, einer Base Transceiver Station (BTS), einen Zugangspunkt, einen Remote Radio Head, einem Übertragungspunkt, einer Relaystation, etc. entsprechen, die in weitere Funktionseinheiten unterteilt sein kann.

Ein Mobilfunkendgerät oder mobiler Sendeempfänger 13a, 13b kann einer Basisstation oder Zelle zugeordnet werden oder bei dieser registriert sein. Der Begriff Zelle bezieht sich auf einen Abdeckungsbereich der Funkdienste, die durch eine Basisstation bereitgestellt werden, z.B. von einer NodeB (NB), einer eNodeB (eNB), einem Remote Radio Head, einem Übertragungspunkt, eine Relay-Station, etc. Eine Basisstation kann eine oder mehrere Zellen auf einer oder mehreren Trägerfrequenzen bereitstellen. In manchen Ausführungsformen kann eine Zelle auch einem Sektor entsprechen. Z.B. können Sektoren mit Sektorantennen, die zur Abdeckung eines Winkelabschnitts um einen Antennenstandort herum ausgebildet sind, gebildet werden. In einigen Ausführungsformen kann eine Basisstation beispielsweise zum Betrieb von drei oder sechs Zellen oder Sektoren ausgelegt sein (z.B. 120° im Fall von drei Zellen und 60° im Fall von sechs Zellen). Eine Basisstation kann mehrere Sektorantennen umfassen. Im Folgenden können die Begriffe Zelle und Basisstation auch synonym verwendet werden. Darüber hinaus werden feste und mobile Basisstationen unterschieden, wobei mobile Basisstationen auch als mobile Relay-Stationen fungieren können.

Mit anderen Worten kann in den Ausführungsformen das Mobilkommunikationssystem auch ein heterogenes Zellnetzwerk (HetNet) umfassen, das unterschiedliche Zelltypen aufweist, z.B. Zellen mit geschlossenen Nutzergruppen (auch engl. "Close Subscriber Group CSG"), Zellen die eine Heimnetz bereitstellen (HeNodeB), die offene oder geschlossene Nutzergruppen versorgen können, und offenen Zellen sowie Zellen unterschiedlicher Größe, wie z.B.

Makrozellen und kleine Zellen, wobei der Abdeckungsbereich einer kleinen Zelle kleiner ist als der Abdeckungsbereich einer Makrozelle. Eine kleine Zelle kann einer Metrozelle, einer Mikrozelle, einer Picozelle, einer Femtozelle usw. entsprechen. Die Abdeckungsbereiche der einzelnen Zellen werden durch die Basisstationen für ihre Versorgungsgebiete bereitgestellt und hängen von den Sendeleistungen der Basisstationen und den Interferenzbedingungen in dem jeweiligen Bereich ab. In manchen Ausführungsformen kann der Abdeckungsbereich einer kleinen Zelle zumindest teilweise von einem Versorgungsbereich einer anderen Zelle umgeben sein oder teilweise mit dem Versorgungsbereich einer z.B. Makrozelle übereinstimmen oder überlappen. Kleine Zellen können eingesetzt werden, um die Kapazität des Netzwerks zu erweitern. Eine Metrozelle kann daher verwendet werden, um eine kleinere Fläche als eine Makrozelle abzudecken, z.B. werden Metrozellen verwendet, um eine Straße oder einen Abschnitt in einem Ballungsgebiet abzudecken. Für eine Makrozelle kann der Abdeckungsbereich einen Durchmesser in der Größenordnung von einem Kilometer oder mehr haben, für eine Mikrozelle kann der Abdeckungsbereich einen Durchmesser von weniger als einem Kilometer haben und eine Picozelle kann einen Abdeckungsbereich mit einen Durchmesser von weniger als 100m haben. Eine Femtozelle kann den kleinsten Abdeckungsbereich aufweisen und sie kann verwendet werden, um beispielsweise einen Haushalts-, einen Kraftfahrzeuginnenraum oder einen Gate-Bereich auf dem Flughafen abzudecken, d.h. ihr Sendegebiet kann einen Durchmesser von unter 50m zu haben. Das erste Funksystem 210 und das zweite Funksystem 220 sind in der Fig. 1 durch jeweils eine Basisstation symbolisiert.

Wie die Fig. 1 weiter zeigt, umfasst die Fahrzeugvorrichtung 10 ferner ein Kontrollmodul 14, das mit den ein oder mehreren Schnittstellen 12 gekoppelt ist. Das Kontrollmodul 14 ist ferner ausgebildet, um über die ein oder mehreren Schnittstellen 12 und das erste Funksystem 210 eine Information über eine Datenübertragung zu empfangen, und um die Datenübertragung über die ein oder mehreren Schnittstellen 12 und über das zweite Funksystem 220 zu veranlassen.

In Ausführungsbeispielen kann das Kontrollmodul 14 einem beliebigen Controller oder Prozessor oder einer programmierbaren Hardwarekomponente entsprechen. Beispielsweise kann das Kontroll-Modul 14 auch als Software realisiert sein, die für eine entsprechende Hardwarekomponente programmiert ist. Insofern kann das Kontrollmodul 14 als programmierbare Hardware mit entsprechend angepasster Software implementiert sein. Dabei können beliebige Prozessoren, wie Digitale Signalprozessoren (DSPs) zum Einsatz kommen. Ausführungsbeispiele sind dabei nicht auf einen bestimmten Typ von Prozessor eingeschränkt.

Es sind beliebige Prozessoren oder auch mehrere Prozessoren zur Implementierung des Kontrollmoduls 14 denkbar. Die Information über die Datenübertragung kann in einigen Ausführungsbeispielen aus ein oder mehreren Bits bestehen, die einfach nur anzeigen, dass eine Datenübertragung erfolgen soll. Prinzipiell können alle weiteren Informationen, z.B. welche Daten und wo sich diese befinden usw., auch erst nach Aufbau einer Verbindung über das zweite Funksystem 220, z.B. zu einem bestimmten Server, bereitgestellt werden. In manchen Ausführungsbeispielen kann solche Information auch zusammen mit der Information über die Datenübertragung über das erste Funksystem 210, bereitgestellt werden.

Fig. 1 zeigt ferner ein Blockdiagramm eines Ausführungsbeispiels einer Vorrichtung 20 für eine Netzwerkkomponente 200. Die Netzwerkkomponente 200 kann prinzipiell einem Computer, einem Server, o.ä. entsprechen, der in dem Netzwerk angeordnet ist und der beispielsweise über das Internet oder WWW erreichbar ist. Die Vorrichtung 20 ist zur Kontrolle einer Datenübertragung an zumindest eine Komponente des Kraftfahrzeugs 100 ausgebildet. Die Vorrichtung 20 umfasst zumindest eine Schnittstelle 22, die ausgebildet ist, um mit zumindest einer anderen Netzwerkkomponente zu kommunizieren. Ähnlich der oben beschriebenen Schnittstelle 12 kann die Schnittstelle 22 ebenfalls ausgebildet sein, um mit beliebigen anderen Netzwerkkomponenten, wie andere Server, Computer, Router, etc. zu kommunizieren. Eine solche Kommunikation kann direkt und indirekt, d.h. über ein oder mehrere Zwischenkomponenten erfolgen. Die Schnittstelle 22 kann beispielsweise einem oder mehreren Eingängen und/oder einem oder mehreren Ausgängen zum Empfangen und/oder Übertragen von Informationen entsprechen, etwa in digitalen Bitwerten, basierend auf einem Code oder Protokoll, innerhalb eines Moduls, zwischen Modulen, oder zwischen Modulen verschiedener Entitäten. Insofern kann die zumindest eine Schnittstelle 22 einer schnurlosen oder schnurgebundenen Schnittstelle entsprechen, die sich eignet entsprechende Information oder Informationen zu übertragen, ggf. unter Verwendung entsprechender Protokolle, z.B. das Internet-Protokoll (IP), das Ethernet-Protokoll, etc.

Die Vorrichtung umfasst ferner ein Kontrollmodul 24, das ausgebildet ist, um über die zumindest eine Schnittstelle 22 Information über eine Anforderung einer Datenübertragung an das Kraftfahrzeug 100 zu erhalten, und um über die zumindest eine Schnittstelle 22 eine Übertragung einer Information über die Anforderung über das Funksystem 210 an das Kraftfahrzeug 100 zu übertragen. Insofern kann in dem in der Fig. 1 gezeigten Ausführungsbeispiel die Information, z.B. in Form von ein oder mehreren Bits, über das Funksystem 210 an die Fahrzeugvorrichtung 10 übertragen werden, die dann ggf. die eigentliche Datenübertragung über das zweite Funksystem 220 veranlasst.

In Ausführungsbeispielen kann das Kontrollmodul 24 einem beliebigen Controller oder Prozessor oder einer programmierbaren Hardwarekomponente entsprechen. Beispielsweise kann das Kontroll-Modul 24 auch als Software realisiert sein, die für eine entsprechende Hardwarekomponente programmiert ist. Insofern kann das Kontrollmodul 24 als programmierbare Hardware mit entsprechend angepasster Software implementiert sein. Dabei können beliebige Prozessoren, wie Digitale Signalprozessoren (DSPs) zum Einsatz kommen. Ausführungsbeispiele sind dabei nicht auf einen bestimmten Typ von Prozessor eingeschränkt. Es sind beliebige Prozessoren oder auch mehrere Prozessoren zur Implementierung des Kontrollmoduls 24 denkbar.

In gestrichelter Darstellung illustriert die Fig.1 ein weiteres Ausführungsbeispiel, wobei die ein oder mehreren Schnittstellen 12 der Fahrzeugvorrichtung 10 ferner ausgebildet sind, um mit einer Kontrolleinrichtung 110 des Kraftfahrzeugs 100 zu kommunizieren, wobei das Kontrollmodul 14 ausgebildet ist, um übertragene Daten an die Kontrolleinrichtung 110 des Fahrzeugs zu übertragen. Die Kontrolleinrichtung 110 des Fahrzeuges 100 kann gemäß einem der oben beschriebenen Kontrollmodule 14, 24 implementiert sein, beispielsweise in Software die auf einem Prozessor ausgeführt wird. Zwischen dem Kontrollmodul 14 und der Kontrolleinrichtung 110 können auch Kontrollinformationen, wie beispielsweise Aktivierungssignale ausgetauscht oder kommuniziert werden. In manchen Ausführungsbeispielen umfasst das Fahrzeug beispielsweise bereits einen der Sendeempfänger 13a, 13b und das Kontrollmodul 14 stellt einsprechende Kontroll- und/oder Steuersignale bereit. Insofern können die in der Fig. 1 gezeigten direkten Verbindungen zwischen den Schnittstellen 12 und den Sendeempfängern 13a, 13b auch indirekt (vgl. gestrichelter Verlauf) über die Kontrolleinrichtung 110 des Fahrzeugs verlaufen.

In einem weiteren Ausführungsbeispiel ist das Kontrollmodul 14 ausgebildet, um, in einem ausgeschalteten Zustand des Kraftfahrzeugs 100, die Sendeempfänger 13a, 13b über die ein oder mehreren Schnittstellen 12 bzgl. des ersten Funksystems 210 in einen empfangsbereiten Zustand zu versetzen und bzgl. des zweiten Funksystems 220 in einen Ruhemodus oder einen ausgeschalteten Zustand zu versetzen. Insofern kann das Kraftfahrzeug über das erste Funksystem 210 erreichbar bleiben, während bzgl. des zweiten Funksystems 220 Energie eingespart werden kann, bis eine Datenübertragung tatsächlich ansteht.

Die Fig. 1 illustriert ferner einen Energiespeicher 18 des Fahrzeugs 100 (optional in Ausführungsbeispielen in gestrichelter Darstellung). In manchen Ausführungsbeispielen ist das Kontrollmodul 14 ausgebildet, um in dem ausgeschalteten Zustand des Kraftfahrzeugs 100, einen Ladezustand des Energiespeichers 18 zu überwachen und die Sendeempfänger 13a, 13b über die ein oder mehreren Schnittstellen 12, bzgl. des ersten oder zweiten oder beiden Funksystemen 210, 220, in einen empfangsbereiten Zustand zu versetzen, wenn eine Mindestladung in dem Energiespeicher 18 vorhanden ist. Der Energiespeicher 18 ist in der Fig.1 als Batterie oder Fahrzeugbatterie implementiert. Wie die gestrichelten Verbindungen in der Fig.1 andeuten, kann eine Überwachung des Ladezustands der Batterie (Energiespeicher 18) direkt durch das Kontrollmodul 14 oder auch indirekt über die Kontrolleinrichtung 110 des Fahrzeugs 100 erfolgen. In manchen Ausführungsbeispielen erfolgt daher eine Überwachung der Batterie des Fahrzeugs. Ein Einschalten oder ein Aufwachvorgang der Sendeempfänger 13a, 13b erfolgt dann in Abhängigkeit des Ladezustands der Batterie, z.B. mittels einer Schwellenwertentscheidung oder des Mindestladezustands.

Die Datenübertragung und/oder ggf. auch die Empfangsbereitschaft der Sendeempfänger 13a, 13b werden/wird dann abhängig von einem Ladezustand der Batterie gemacht. Insofern kann bei niedrigem Ladezustand der Batterie die Datenübertragung unterbleiben, bzw. auch die Empfangsbereitschaft bzgl. der Information über die Datenübertragung unterbunden werden, um den Ladezustand der Batterie nicht weiter zu verschlechtern. Etwaige Datenübertragungsversuche oder Aufwachvorgänge zur Datenübertragung können dann erfolgen, wenn der Ladezustand des Energiespeichers über einer gewissen Schwelle liegt. Ein Aufwachen soll dann nur geschehen, wenn genug Energie vorhanden ist.

Das Kontrollmodul 14 der Fahrzeugvorrichtung 10 ist in einem weiteren Ausführungsbeispiel ausgebildet, um die Information über die Datenübertragung in Form einer Kurznachricht über das erste Funksystem 210 zu empfangen. In Ausführungsbeispielen sind generell für auch beliebige andere Funksysteme 210 und/oder Protokolle zur Übertragung der Information über die Datenübertragung denkbar. Das Kontrollmodul 24 der Netzwerkvorrichtung 20 ist dann ausgebildet, um die Information über die Anforderung der Datenübertragung entsprechend in Form einer Kurznachricht über das erste Funksystem 210 zu übertragen, wie dies durch den gestrichelten Pfeil in der Fig.1 angedeutet ist. Das erste Funksystem 210 kann dabei beispielsweise einem GSM-System oder einem anderen der oben genannten Systeme entsprechen. Das zweite Funksystem 220 kann beispielsweise einem WLAN-System entsprechen, es ist aber auch denkbar, dass es sich um eine Heimnetzzelle (HeNodeB) eines anderen Mobilfunkstandards handelt. Insofern kann in manchen Ausführungsbeispielen per SMS eine Datenübertragung über WLAN ausgelöst werden. Beispielsweise kann das Fahrzeug dabei auf bestimmte vorgegebene oder vorbekannte WLAN oder andere Netze zugreifen, wie z.B. ein Heim- oder Firmennetz.

In Ausführungsbeispielen kann die Datenübertragung beispielsweise eine Übertragung von Aktualisierungsdaten für eine Komponente des Fahrzeugs 100, Mediadaten für ein Medienabspielsystem des Kraftfahrzeugs 100, oder Kontrolldaten eines Herstellers des Kraftfahrzeugs 100 oder eines Herstellers von Kraftfahrzeugkomponenten umfassen. Z.B. können vom Hersteller des Fahrzeugs 100 oder auch von Fahrzeugkomponenten Software- oder Firmwareupdates bereitgestellt werden, über die das Fahrzeug dann per SMS informiert wird. Die zumindest eine Schnittstelle 22 der Netzwerkvorrichtung 20 kann ausgebildet sein, um die Information über die Anforderung von einem Nutzer des Kraftfahrzeugs 100 (z.B. via ein Programm, das auf einem PC, Laptop, Tablet oder Smartphone abläuft), von einem Komponentenhersteller des Kraftfahrzeugs 100, oder von einem Hersteller des Kraftfahrzeugs 100 zu erhalten.

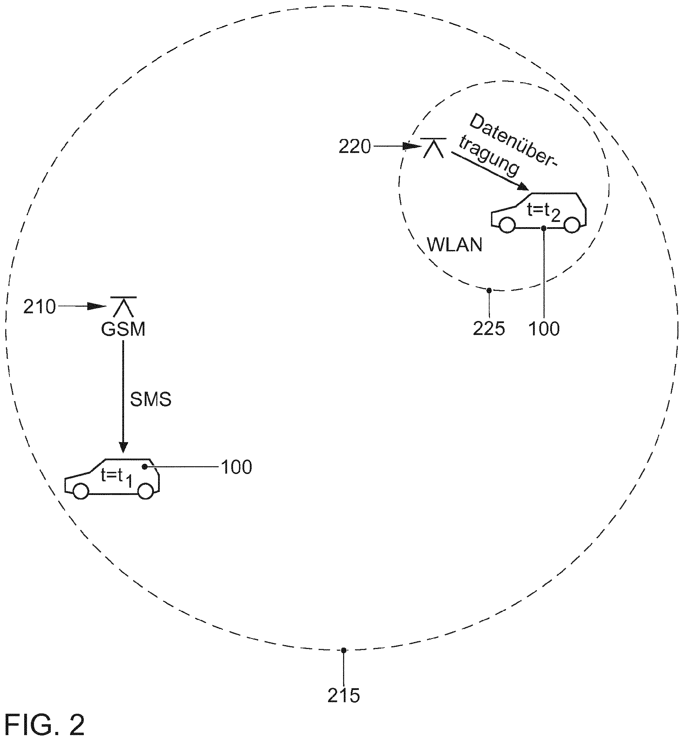

In einem weiteren Ausführungsbeispiel ist das Kontrollmodul 14 der Fahrzeugvorrichtung 10 ausgebildet, um, nach Erhalt der Information über die Datenübertragung (z.B. der SMS), über die ein oder mehreren Schnittstellen 12 den Sendeempfänger 13b für das zweite Funksystem 220, z.B. WLAN, in einen empfangsbereiten Zustand zu versetzen. Im Folgenden kann dann überprüft werden, ob Datenübertragungsdienste über das zweite Funksystem 220 verfügbar sind. Das Kontrollmodul 14 kann dann ferner ausgebildet sein, um die Datenübertragung zu veranlassen, wenn Datenübertragungsdienste über das zweite Funksystem 220 verfügbar sind. Das Kontrollmodul 14 kann ferner ausgebildet sein, um, wenn Datenübertragungsdienste über das zweite Funksystem 220 nicht verfügbar sind und zumindest wenn sich das Kraftfahrzeug 100 im ausgeschalteten Zustand befindet, über die ein oder mehreren Schnittstellen 12 den Sendeempfänger 13b für das zweite Funksystem 220 wieder in den Ruhemodus oder in den ausgeschalteten Zustand zu versetzen, und zu einem späteren Zeitpunkt eine Verfügbarkeit von Datenübertragungsdiensten in dem zweiten Funksystem 220 erneut zu überprüfen und die Datenübertragung zu veranlassen, wenn Datenübertragungsdienste über das zweite Funksystem 220 verfügbar sind. Ein solches Ausführungsbeispiel soll anhand der Fig. 2 näher erläutert werden. Fig. 2 zeigt ein Blockdiagram eines Ausführungsbeispiels eines Fahrzeugs 100, das ein Ausführungsbeispiel der oben beschriebenen Fahrzeugvorrichtung 10 umfasst in einem Szenario außerhalb einer Reichweite 225 eines zweiten Funksystems 220 zu einem ersten Zeitpunkt t=t₁, und innerhalb der Reichweite 225 des zweiten Funksystems 220 zum einem zweiten späteren Zeitpunkt t=t₂>t₁. Das erste Funksystem 210 kann dabei als GSM-, UMTS oder auch als LTE-System angenommen werden, während das zweite Funksystem als WLAN oder eine HeNodeB angenommen werden kann. Ferner illustriert die Fig. 2, dass das Fahrzeug 100 die SMS im Abdeckungsbereich 215 des GSM-system 210 empfängt, dort jedoch noch keine Verbindung zu dem WLAN-System 220 hat. Erst zum späteren Zeitpunkt befindet sich das Fahrzeug 100 im Abdeckungsbereich 225 des WLAN-Systems 220 und baut dann die Verbindung zur eigentlichen Datenübertragung auf.

In manchen Ausführungsbeispielen kann das Kontrollmodul 14 ausgebildet sein, um den späteren Zeitpunkt basierend auf einem vordefinierten Zeitraum zu wählen. Beispielsweise kann dieser Zeitraum über Nacht oder zu bestimmten Tageszeiten liegen. Dieser Zeitraum kann von einem Benutzer des Fahrzeugs vorgegeben werden und/oder aber auch auf Verfügbarkeiten aus der Vergangenheit basieren. Insofern kann das Kontrollmodul 14 ausgebildet sein, um den späteren Zeitpunkt basierend auf einer Verfügbarkeitsinformation zu wählen. In einem weiteren Ausführungsbeispiel kann die Fahrzeugvorrichtung 10 ferner ein Speichermodul 16 umfassen (vgl. Fig. 1), wobei das Kontrollmodul 14 ausgebildet ist, um über das Speichermodul 16 Information über eine zeitliche und/oder örtliche Verfügbarkeit der Datenübertragung in dem zweiten Funksystem 220 als Verfügbarkeitsinformation zu speichern.

In zumindest manchen Ausführungsbeispielen kann das Speichermodul zumindest ein Element der Gruppe von Computerlesbares Speichermedium, Magnetisches Speichermedium (e.g. Festplatte), Flash-Speichermedium (z.B. Speicherkarte, Solid State-Festplatte), Optisches Speichermedium, Diskette, Programmable Read Only Memory (PROM), Erasable Programmable Read Only Memory (EPROM), Electronically Erasable Programmable Read Only Memory (EEPROM), und Netzwerkspeicher umfassen.

Insofern kann das Fahrzeug eine Verfügbarkeitshistorie oder eine Verfügbarkeitskarte des zweiten Funksystems 220 erstellen und dann den späteren Zeitpunkt anhand dieser Information, d.h. nach Zeit oder Ort bestimmen.

In weiteren Ausführungsbeispielen ist das Kontrollmodul 14 ausgebildet, um über das erste oder das zweite Funksystem 210, 220 Information bezüglich des Status der Datenübertragung an die Netzwerkkomponente 200 zu übertragen. Das Kontrollmodul 24 der Netzwerkkomponente 200 ist dann entsprechend ausgebildet, um die Information über den Status zu empfangen. Die Netzwerkkomponente kann dann die Datenübertragung kontrollieren bzw. überwachen, da der Status dort bekannt wird. Z.B. meldet das Fahrzeug beim Parken seinen letzten Zustand und informiert das Backend (Netzwerkkomponente 200) darüber ob eine WLAN-Verbindung, oder generell eine Verbindung zum zweiten Funksystem 220, verfügbar ist, und z.B. dass es sich ausschaltet. Dann kennt das Backend den letzten Stand und der Prozess kann optimiert werden. Beispielweise könnte in dringenden Fällen dann auch eine Datenübertragung über andere, ggf. ungünstigere Funksysteme durch die Netzwerkkomponente ausgelöst werden. Beispielsweise kann als Statusinformation mitgeteilt werden, ob eine Information über eine Datenübertragung empfangen wurde, welche Funksysteme verfügbar sind, insbesondere ob das zweite Funksystem verfügbar ist, ob die Datenübertragung abgeschlossen wurde, ob ein Versuch der Datenübertragung z.B. mangels Verfügbarkeit des zweiten Funksystems gescheitert ist, ob ein Datenübertragungsversuch wiederholt wird, wann gemäß einer Verfügbarkeitshistorie mit der Datenübertragung zu rechnen ist etc. Ausführungsbeispiele können so eine Kontrolle oder Überwachung der Datenübertragung durch die Netzwerkkomponente 200 ermöglichen.

Ausführungsbeispiele könnten insofern eine Koordination einer Nutzung auch von privaten WLAN oder anderen Netzen bieten, insbesondere für die Übertragung von hohen Datenvolumen. Dabei kann eine durch diese Übertragung verwendete Kapazität in anderen Mobilfunknetzen reduziert werden, bzw. Ressourcen anderer Netze können geschont werden, ggf. Kosten reduziert werden. Darüber hinaus können aufgrund der höheren Datenraten, die im WLAN-System ggf. zur Verfügung stehen auch ggf. Übertragungszeiten entsprechend reduziert bzw. auf akzeptablem Niveau gehalten werden. Wie bereits oben beschrieben kann das Kontrollmodul 14 der Fahrzeugvorrichtung 10 eine Verbindung oder Kopplung zur einer Kontrolleinrichtung 110 des Fahrzeugs 100 haben, z. B. zu einem Steuergerät oder auch engl. Electronic Control Module (ECM). Über diese Kopplung sind beispielsweise auch Aktivierungen einzelner Komponenten möglich, z.B. der jeweiligen Sendeempfänger 13a, 13b wie beispielsweise für WLAN. Ein zellulares System, z.B. GSM, kann dann zur Aktivierung genutzt werden. Solche Komponenten können dann nach Bedarf ein- bzw. ausgeschaltet werden, z.B. zu Beginn und nach Ende einer Datenübertragung.

Darüber hinaus kann in Ausführungsbeispielen eine Datenübertragung von einem Nutzer des Kraftfahrzeugs oder von einer anderen Netzwerkkomponente (auch engl. Back-End) aus verschiedenen Gründen initiiert werden, wie z.B. zum Zweck von Aktualisierungen, Videodaten nach Bedarf, Kartenaktualisierung, etc. In manchen Ausführungsbeispielen kann beispielsweise nach einem Parken und Ausschalten des Kraftfahrzeugs 100 eine Verfügbarkeit eines zuvor konfigurierten oder vorbestimmten WLAN Netzes geprüft werden und dann ggf. eine Datenübertragung oder ein Download initiiert werden. Ausführungsbeispiele können so eine einfache Herstellung einer Verbindung zu dem oben beschriebenen späteren Zeitpunkt ermöglichen. In manchen Ausführungsbeispielen kann die Fahrzeugvorrichtung 10 auch in regelmäßigen Zeitabständen versuchen eine WLAN Verbindung herzustellen, beispielsweise einmal pro Stunde oder alle 15min, 30min, etc. Sofern eine Verbindung zum WLAN bzw. einem entsprechenden privaten Zugriffspunkt hergestellt wurde kann dann die Datenübertragung beginnen.

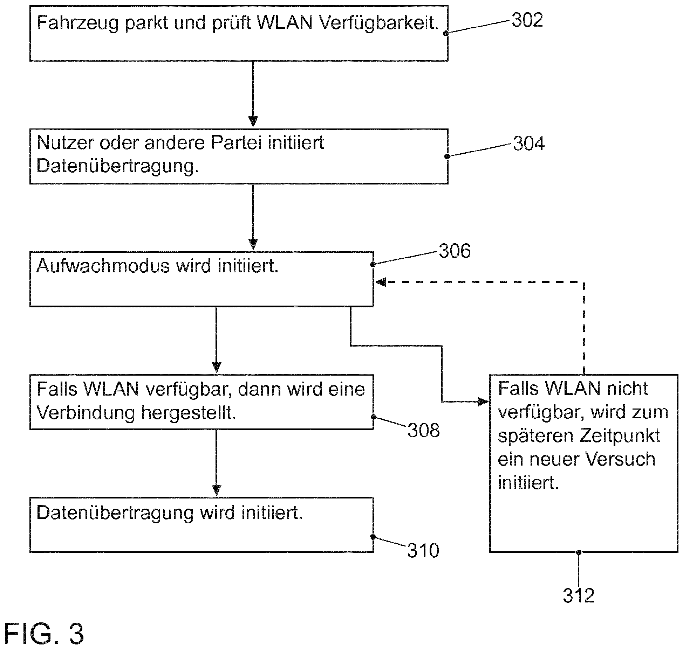

Fig. 3 zeigt ein Blockdiagramm eines Ausführungsbeispiels eines Verfahrens zur Kontrolle eines Datenverkehrs oder einer Datenübertragung. In einem Schritt 302 wird zunächst das Fahrzeug 100 geparkt und die Verfügbarkeit eines WLAN-Systems geprüft. Es wird dann angenommen, dass ein Sendeempfänger für WLAN in einen Ruhe- oder Standbymodus geschaltet wird, um während des Parkens möglichst wenig Energie aus der Fahrzeugbatterie zu entnehmen. Wird nun von einem Nutzer oder einer anderen Partei (Hersteller, Zulieferer, Dienstleister, etc.) eine Datenübertragung in einem Schritt 304 initiiert (z.B. per SMS), kann in einem nachfolgenden Schritt 306 ein Aufwachmodus aktiviert werden, beispielsweise über ein Steuergerät am Fahrzeug ein WLAN Sendeempfänger aktiviert werden. Wenn ein WLAN verfügbar ist, dann kann nun in einem Schritt 308 eine Verbindung hergestellt werden und nachfolgend in einem Schritt 310 die Datenübertragung initiiert werden. Falls kein WLAN verfügbar ist, kann zu einem späteren Zeitpunkt ein erneuter Versuch durchgeführt werden, was in der Fig. 3 in einem Schritt 312 und einen gestrichelten Pfeil dargestellt ist.

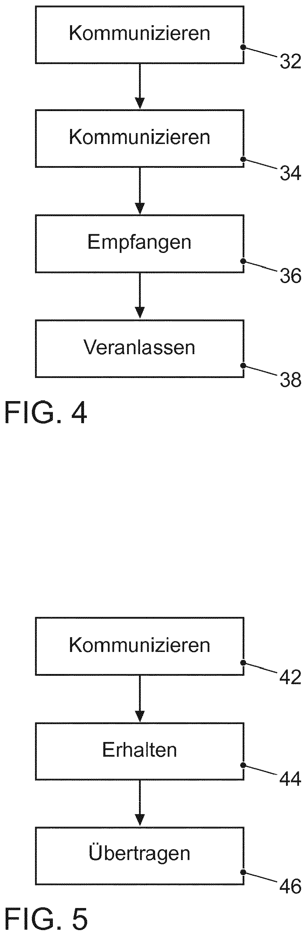

Fig. 4 zeigt ein Blockdiagramm eines Ausführungsbeispiels eines Verfahrens zur Kontrolle eines Datenverkehrs mit Komponenten eines Kraftfahrzeugs 100. Das Verfahren umfasst ein Kommunizieren 32 mit wenigstens einem Sendeempfänger 13a eines ersten Funksystems 210, und ein Kommunizieren 34 mit wenigstens einem Sendeempfänger 13b eines zweiten Funksystems 220. Das Verfahren umfasst ferner ein Empfangen 36 einer Information über eine Datenübertragung über das erste Funksystem 210, und ein Veranlassen 38 der Datenübertragung über das zweite Funksystem 220.

Fig. 5 zeigt ein Blockdiagramm eines Ausführungsbeispiels eines Verfahrens für eine Netzwerkkomponente 200 zur Kontrolle einer Datenübertragung an zumindest eine Komponente eines Kraftfahrzeugs 100. Das Verfahren umfasst ein Kommunizieren 42 mit einer anderen Netzwerkkomponente und ein Erhalten 44 von Information über eine Anforderung einer Datenübertragung an ein Kraftfahrzeug 100. Das Verfahren umfasst ferner ein Übertragen 46 einer Information über die Anforderung über ein Funksystem 210 an das Kraftfahrzeug 100.

Ein weiteres Ausführungsbeispiel ist ein Computerprogramm zur Durchführung zumindest eines der oben beschriebenen Verfahren, wenn das Computerprogramm auf einem Computer, einem Prozessor oder einer programmierbaren Hardwarekomponente abläuft. Ein weiteres Ausführungsbeispiel ist auch ein digitales Speichermedium, das maschinen- oder computerlesbar ist, und das elektronisch lesbare Steuersignale aufweist, die mit einer programmierbaren Hardwarekomponente so zusammenwirken können, dass eines der oben beschriebenen Verfahren ausgeführt wird.

Die in der vorstehenden Beschreibung, den nachfolgenden Ansprüchen und den beigefügten Figuren offenbarten Merkmale können sowohl einzeln wie auch in beliebiger Kombination für die Verwirklichung eines Ausführungsbeispiels in ihren verschiedenen Ausgestaltungen von Bedeutung sein und implementiert werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-Ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einer programmierbaren Hardwarekomponente derart zusammenwirken können oder zusammenwirken, dass das jeweilige Verfahren durchgeführt wird.

Eine programmierbare Hardwarekomponente kann durch einen Prozessor, einen Computerprozessor (CPU = Central Processing Unit), einen Grafikprozessor (GPU = Graphics Processing Unit), einen Computer, ein Computersystem, einen anwendungsspezifischen integrierten Schaltkreis (ASIC = Application-Specific Integrated Circuit), einen integrierten Schaltkreis (IC = Integrated Circuit), ein Ein-Chip-System (SOC = System on Chip), ein programmierbares Logikelement oder ein feldprogrammierbares Gatterarray mit einem Mikroprozessor (FPGA = Field Programmable Gate Array) gebildet sein.

Das digitale Speichermedium kann daher maschinen- oder computerlesbar sein. Manche Ausführungsbeispiele umfassen also einen Datenträger, der elektronisch lesbare Steuersignale aufweist, die in der Lage sind, mit einem programmierbaren Computersystem oder einer programmierbare Hardwarekomponente derart zusammenzuwirken, dass eines der hierin beschriebenen Verfahren durchgeführt wird. Ein Ausführungsbeispiel ist somit ein Datenträger (oder ein digitales Speichermedium oder ein computerlesbares Medium), auf dem das Programm zum Durchführen eines der hierin beschriebenen Verfahren aufgezeichnet ist.

Allgemein können Ausführungsbeispiele der vorliegenden Erfindung als Programm, Firmware, Computerprogramm oder Computerprogrammprodukt mit einem Programmcode oder als Daten implementiert sein, wobei der Programmcode oder die Daten dahin gehend wirksam ist bzw. sind, eines der Verfahren durchzuführen, wenn das Programm auf einem Prozessor oder einer programmierbaren Hardwarekomponente abläuft. Der Programmcode oder die Daten kann bzw. können beispielsweise auch auf einem maschinenlesbaren Träger oder Datenträger gespeichert sein. Der Programmcode oder die Daten können unter anderem als Quellcode, Maschinencode oder Bytecode sowie als anderer Zwischencode vorliegen.

Ein weiteres Ausführungsbeispiel ist ferner ein Datenstrom, eine Signalfolge oder eine Sequenz von Signalen, der bzw. die das Programm zum Durchführen eines der hierin beschriebenen Verfahren darstellt bzw. darstellen. Der Datenstrom, die Signalfolge oder die Sequenz von Signalen kann bzw. können beispielsweise dahin gehend konfiguriert sein, um über eine Datenkommunikationsverbindung, beispielsweise über das Internet oder ein anderes Netzwerk, transferiert zu werden. Ausführungsbeispiele sind so auch Daten repräsentierende Signalfolgen, die für eine Übersendung über ein Netzwerk oder eine Datenkommunikationsverbindung geeignet sind, wobei die Daten das Programm darstellen.

Ein Programm gemäß einem Ausführungsbeispiel kann eines der Verfahren während seiner Durchführung beispielsweise dadurch umsetzen, dass dieses Speicherstellen ausliest oder in diese ein Datum oder mehrere Daten hinein schreibt, wodurch gegebenenfalls Schaltvorgänge oder andere Vorgänge in Transistorstrukturen, in Verstärkerstrukturen oder in anderen elektrischen, optischen, magnetischen oder nach einem anderen Funktionsprinzip arbeitenden Bauteile hervorgerufen werden. Entsprechend können durch ein Auslesen einer Speicherstelle Daten, Werte, Sensorwerte oder andere Informationen von einem Programm erfasst, bestimmt oder gemessen werden. Ein Programm kann daher durch ein Auslesen von einer oder mehreren Speicherstellen Größen, Werte, Messgrößen und andere Informationen erfassen, bestimmen oder messen, sowie durch ein Schreiben in eine oder mehrere Speicherstellen eine Aktion bewirken, veranlassen oder durchführen sowie andere Geräte, Maschinen und Komponenten ansteuern.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Bezugszeichenliste

- 10: Fahrzeugvorrichtung
- 12: ein oder mehrere Schnittstellen
- 13a,b: Sendeempfänger
- 14: Kontrollmodul
- 16: Speichermodul
- 18: Energiespeicher
- 20: Netzwerkvorrichtung
- 22: zumindest eine Schnittstelle
- 24: Kontrollmodul
- 32: Kommunizieren
- 34: Kommunizieren
- 36: Empfangen
- 38: Veranlassen
- 42: Kommunizieren
- 44: Erhalten
- 46: Übertragen
- 100: Kraftfahrzeug
- 110: Kontrolleinrichtung
- 200: Netzwerkkomponente
- 210: erstes Funksystem
- 215: Abdeckungsbereich erstes Funksystem
- 220: zweites Funksystem
- 225: Abdeckungsbereich zweites Funksystem
- 302: Parken und Verfügbarkeitsprüfung
- 304: Initiierung Datenübertragung
- 306: Aufwachmodus
- 308: Verbindungsaufbau bei Verfügbarkeit
- 310: Datenübertragung
- 312: Wiederholungsversuch

## Patentansprüche

1. Vorrichtung (10) zur Kontrolle eines Datenverkehrs mit Komponenten eines Kraftfahrzeugs (100) in einem Kraftfahrzeug (100), mit
ein oder mehreren Schnittstellen (12), die ausgebildet sind, um mit wenigstens einem vom Kraftfahrzeug umfassten Sendeempfänger (13a) eines ersten Funksystems (210) und um wenigstens mit einem vom Kraftfahrzeug umfassten Sendeempfänger (13b) eines zweiten Funksystems (220) zu kommunizieren;
einem Kontrollmodul (14), das ausgebildet ist, um über die ein oder mehreren Schnittstellen (12) und das erste Funksystem (210) eine Information über eine Datenübertragung zu empfangen, und um die Datenübertragung über die ein oder mehreren Schnittstellen (12) und über das zweite Funksystem (220) zu veranlassen; wobei das Kontrollmodul (14) ausgebildet ist, um, in einem ausgeschalteten Zustand des Kraftfahrzeugs (100), die Sendeempfänger (13a; 13b) über die ein oder mehreren Schnittstellen (12) bzgl. des ersten Funksystems (210) in einen empfangsbereiten Zustand zu versetzen und bzgl. des zweiten Funksystems (220) in einen Ruhemodus oder einen ausgeschalteten Zustand zu versetzen; und
wobei das Kontrollmodul (14) ausgebildet ist, um in dem ausgeschalteten Zustand des Kraftfahrzeugs (100), einen Ladezustand eines vom Kraftfahrzeug umfassten Energiespeichers (18) zu überwachen und die Sendeempfänger (13a; 13b) über die ein oder mehreren Schnittstellen (12) in einen empfangsbereiten Zustand zu versetzen, wenn eine Mindestladung in dem Energiespeicher (18) vorhanden ist.

2. Vorrichtung (10) gemäß Anspruch 1, wobei die ein oder mehreren Schnittstellen (12) ferner ausgebildet sind, um mit einer Kontrolleinrichtung (110) des Kraftfahrzeugs (100) zu kommunizieren, wobei das Kontrollmodul (14) ausgebildet ist, um übertragene Daten an die Kontrolleinrichtung (110) des Fahrzeugs zu übertragen.

3. Vorrichtung (10) gemäß einem der vorangehenden Ansprüche, wobei das Kontrollmodul (14) ausgebildet ist, um die Information über die Datenübertragung in Form einer Kurznachricht über das erste Funksystem (210) zu empfangen.

4. Vorrichtung (10) gemäß einem der vorangehenden Ansprüche, wobei das erste Funksystem (210) einem Global System for Mobile communication, GSM, entspricht, und/oder wobei das zweite Funksystem (220) einem Wireless Local Area Network, WLAN, entspricht.

5. Vorrichtung (10) gemäß einem der vorangehenden Ansprüche, wobei die Datenübertragung eine Übertragung von Aktualisierungsdaten für eine Komponente des Fahrzeugs (100), Mediadaten für ein Medienabspielsystem des Kraftfahrzeugs (100), oder Kontrolldaten eines Herstellers des Kraftfahrzeugs (100) oder eines Herstellers von Kraftfahrzeugkomponenten umfasst.

6. Vorrichtung (10) gemäß einem der vorangehenden Ansprüche, wobei das Kontrollmodul (14) ausgebildet ist, um, nach Erhalt der Information über die Datenübertragung, über die ein oder mehreren Schnittstellen (12) den Sendeempfänger (13b) für das zweite Funksystem (220) in einen empfangsbereiten Zustand zu versetzen, zu überprüfen, ob Datenübertragungsdienste über das zweite Funksystem (220) verfügbar sind, und die Datenübertragung zu veranlassen, wenn Datenübertragungsdienste über das zweite Funksystem (220) verfügbar sind.

7. Vorrichtung (10) gemäß Anspruch 6, wobei das Kontrollmodul (14) ausgebildet ist, um, wenn Datenübertragungsdienste über das zweite Funksystem (220) nicht verfügbar sind und zumindest wenn sich das Kraftfahrzeug (100) im ausgeschalteten Zustand befindet, über die ein oder mehreren Schnittstellen (12) den Sendeempfänger (13b) für das zweite Funksystem (220) wieder in den Ruhemodus oder den ausgeschalteten Zustand zu versetzen, und zu einem späteren Zeitpunkt eine Verfügbarkeit von Datenübertragungsdiensten dem zweiten Funksystem (220) erneut zu überprüfen und die Datenübertragung zu veranlassen, wenn Datenübertragungsdienste über das zweite Funksystem (220) verfügbar sind.

8. Vorrichtung (10) gemäß Anspruch 7, wobei das Kontrollmodul (14) ausgebildet ist, um den späteren Zeitpunkt basierend auf einem vordefinierten Zeitraum zu wählen, und/oder wobei das Kontrollmodul (14) ausgebildet ist, um den späteren Zeitpunkt basierend auf einer Verfügbarkeitsinformation zu wählen.

9. Vorrichtung (10) gemäß Anspruch 8, die ferner ein Speichermodul (16) umfasst, wobei das Kontrollmodul (14) ausgebildet ist, um über das Speichermodul (16) Information über eine zeitliche und/oder örtliche Verfügbarkeit der Datenübertragung in dem zweiten Funksystem (220) als Verfügbarkeitsinformation zu speichern.

10. Vorrichtung (10) gemäß einem der vorangehenden Ansprüche, wobei das Kontrollmodul (14) ausgebildet ist, um über das erste oder das zweite Funksystem (210;220) Information bezüglich des Status der Datenübertragung an eine Netzwerkkomponente (200) zu übertragen.

11. Kraftfahrzeug (100), umfassend wenigstens einen Sendeempfänger (13a) eines ersten Funksystems (210), wenigstens einen Sendeempfänger (13b) eines zweiten Funksystems (220) sowie eine Vorrichtung (10) gemäß einem der vorangehenden Ansprüche.

12. Verfahren zur Kontrolle eines Datenverkehrs mit Komponenten eines Kraftfahrzeugs (100) in einem Kraftfahrzeug (100), beinhaltend die folgenden durch ein oder mehrere Schnittstellen (12) einer Vorrichtung zur Kontrolle des Datenverkehrs ausgeführten Schritte:
Kommunizieren (32) mit wenigstens einem vom Kraftfahrzeug umfassten Sendeempfänger (13a) eines ersten Funksystems (210);
Kommunizieren (34) mit wenigstens einem vom Kraftfahrzeug umfassten Sendeempfänger (13b) eines zweiten Funksystems (220);
sowie beinhaltend die folgenden durch ein Kontrollmodul der Vorrichtung zur Kontrolle des Datenverkehrs ausgeführten Schritte:
Empfangen (36) einer Information über eine Datenübertragung über das erste Funksystem (210);
Veranlassen (38) der Datenübertragung über das zweite Funksystem (220);
Versetzen des Sendeempfängers (13a) des ersten Funksystems (210) in einen empfangsbereiten Zustand und Versetzen des Sendeempfängers (13b) des zweiten Funksystems (220) in einen Ruhemodus oder einen ausgeschalteten Zustand in einem ausgeschalteten Zustand des Kraftfahrzeugs (100); und
Überwachen eines Ladezustands eines vom Kraftfahrzeug umfassten Energiespeichers (18) in dem ausgeschalteten Zustand des Kraftfahrzeugs (100), und Versetzen der Sendeempfänger (13a; 13b) über die ein oder mehreren Schnittstellen (12) in einen empfangsbereiten Zustand , wenn eine Mindestladung in dem Energiespeicher (18) vorhanden ist.

## Claims

1. Device (10) for controlling data traffic with components of a motor vehicle (100) in a motor vehicle (100), having
one or more interfaces (12) designed to communicate with at least one transceiver (13a), which the motor vehicle comprises, of a first radio system (210) and with at least one transceiver (13b), which the motor vehicle comprises, of a second radio system (220);
a control module (14) designed to receive a piece of information about a data transmission via the one or more interfaces (12) and the first radio system (210), and to initiate the data transmission via the one or more interfaces (12) and via the second radio system (220) ;
wherein the control module (14) is designed so as, in a switched-off state of the motor vehicle (100), to put the transceivers (13a; 13b) into a ready-to-receive state with respect to the first radio system (210), and to put said transceivers into a quiescent mode or a switched-off state with respect to the second radio system (220), via the one or more interfaces (12); and wherein the control module (14) is designed so as, in the switched-off state of the motor vehicle (100), to monitor a state of charge of an energy store (18), which the motor vehicle comprises,
and to put the transceivers (13a; 13b) into a ready-to-receive state via the one or more interfaces (12) if a minimum charge is present in the energy store (18).

2. Device (10) according to Claim 1, wherein the one or more interfaces (12) are further designed to communicate with a control device (110) of the motor vehicle (100), wherein the control module (14) is designed to transmit transmitted data to the control device (110) of the vehicle.

3. Device (10) according to either of the preceding claims, wherein the control module (14) is designed to receive the information about the data transmission in the form of a short message via the first radio system (210) .

4. Device (10) according to one of the preceding claims, wherein the first radio system (210) corresponds to a Global System for Mobile Communication, GSM, and/or wherein the second radio system (220) corresponds to a wireless local area network, WLAN.

5. Device (10) according to one of the preceding claims, wherein the data transmission comprises a transmission of update data for a component of the vehicle (100), media data for a media playback system of the motor vehicle (100), or control data of a manufacturer of the motor vehicle (100) or of a manufacturer of motor vehicle components.

6. Device (10) according to one of the preceding claims, wherein the control module (14) is designed so as, after obtaining the information about the data transmission, to put the transceiver (13b) for the second radio system (220) into a ready-to-receive state via the one or more interfaces (12), to check whether data transmission services are available via the second radio system (220), and to initiate the data transmission if data transmission services are available via the second radio system (220).

7. Device (10) according to Claim 6, wherein the control module (14) is designed so as, if data transmission services are not available via the second radio system (220), and at least if the motor vehicle (100) is in the switched-off state, to put the transceiver (13b) for the second radio system (220) back into the quiescent mode or the switched-off state via the one or more interfaces (12), and to check an availability of data transmission services in the second radio system (220) again at a later time, and to initiate the data transmission if data transmission services are available via the second radio system (220) .

8. Device (10) according to Claim 7, wherein the control module (14) is designed to choose the later time based on a predefined period of time, and/or wherein the control module (14) is designed to choose the later time based on a piece of availability information.

9. Device (10) according to Claim 8, which further comprises a memory module (16), wherein the control module (14) is designed to use the memory module (16) to store information about a temporal and/or local availability of the data transmission in the second radio system (220) as availability information.

10. Device (10) according to one of the preceding claims, wherein the control module (14) is designed to use the first or the second radio system (210; 220) to transmit information concerning the status of the data transmission to a network component (200).

11. Motor vehicle (100) comprising at least one transceiver (13a) of a first radio system (210), at least one transceiver (13b) of a second radio system (220) and a device (10) according to one of the preceding claims.

12. Method for controlling data traffic with components of a motor vehicle (100) in a motor vehicle (100), including the following steps performed by one or more interfaces (12) of a device for controlling the data traffic:
communicating (32) with at least one transceiver (13a), which the motor vehicle comprises, of a first radio system (210);
communicating (34) with at least one transceiver (13b), which the motor vehicle comprises, of a second radio system (220);
and including the following steps performed by a control module of the apparatus for controlling the data traffic:
receiving (36) a piece of information about a data transmission via the first radio system (210);
initiating (38) the data transmission via the second radio system (220);
putting the transceiver (13a) of the first radio system (210) into a ready-to-receive state and putting the transceiver (13b) of the second radio system (220) into a quiescent mode or a switched-off state in a switched-off state of the motor vehicle (100); and
monitoring a state of charge of an energy store (18), which the motor vehicle comprises, in the switched-off state of the motor vehicle (100), and putting the transceivers (13a; 13b) into a ready-to-receive state via the one or more interfaces (12) if a minimum charge is present in the energy store (18).

## Revendications

1. Arrangement (10) de contrôle du trafic de données avec les composants d'un véhicule automobile (100) dans un véhicule automobile (100), comprenant
une ou plusieurs interfaces (12), qui sont configurées pour communiquer avec au moins un émetteur/récepteur (13a) compris par le véhicule automobile d'un premier système radioélectrique (210) et avec au moins un émetteur/récepteur (13b) compris par le véhicule automobile d'un deuxième système radioélectrique (220) ; un module de contrôle (14), qui est configuré pour recevoir, par le biais de l'une ou des plusieurs interfaces (12) et du premier système radioélectrique (210), une information à propos d'une transmission de données, et pour provoquer la transmission de données par le biais de l'une ou des plusieurs interfaces (12) et par le biais du deuxième système radioélectrique (220) ;
le module de contrôle (14) étant configuré pour, dans un état éteint du véhicule automobile (100), amener les émetteurs/récepteurs (13a ; 13b) dans un état prêt à la réception par le biais de l'une ou des plusieurs interfaces (12) à l'égard du premier système radioélectrique (210) et/ou les amener dans un mode de repos ou dans un état éteint à l'égard du deuxième système radioélectrique (220) ; et
le module de contrôle (14) étant configuré pour, dans l'état éteint du véhicule automobile (100), surveiller un état de charge d'un accumulateur d'énergie (18) compris par le véhicule automobile et amener les émetteurs/récepteurs (13a ; 13b) dans un état prêt à la réception par le biais de l'une ou des plusieurs interfaces (12) lorsqu'une charge minimale est présente dans l'accumulateur d'énergie (18).

2. Arrangement (10) selon la revendication 1, l'une ou les plusieurs interfaces (12) étant en outre configurées pour communiquer avec un dispositif de contrôle (110) du véhicule automobile (100), le module de contrôle (14) étant configuré pour transmettre les données transmises au dispositif de contrôle (110) du véhicule automobile.

3. Arrangement (10) selon l'une des revendications précédentes, le module de contrôle (14) étant configuré pour recevoir l'information à propos de la transmission de données sous la forme d'un message court par le biais du premier système radioélectrique (210).

4. Arrangement (10) selon l'une des revendications précédentes, le premier système radioélectrique (210) correspondant à un système mondial de communications mobiles, GSM, et/ou le deuxième système radioélectrique (220) correspondant à un réseau local sans fil, WLAN.

5. Arrangement (10) selon l'une des revendications précédentes, la transmission de données comprenant une transmission de données d'actualisation pour un composant du véhicule automobile (100), de données multimédias pour un système de lecture multimédia du véhicule automobile (100) ou de données de contrôle d'un constructeur du véhicule automobile (100) ou d'un fabricant de composants du véhicule automobile.

6. Arrangement (10) selon l'une des revendications précédentes, le module de contrôle (14) étant configuré pour, après avoir obtenu l'information à propos de la transmission de données, amener l'émetteur/récepteur (13b) pour le deuxième système radioélectrique (220) dans un état prêt à la réception par le biais de l'une ou des plusieurs interfaces (12) afin de vérifier si des services de transmission de données sont disponibles par le biais du deuxième système radioélectrique (220) et autoriser la transmission de données si des services de transmission de données sont disponibles par le biais du deuxième système radioélectrique (220).

7. Arrangement (10) selon la revendication 6, le module de contrôle (14) étant configuré pour, lorsque des services de transmission de données ne sont pas disponibles par le biais du deuxième système radioélectrique (220) et au moins lorsque le véhicule automobile (100) se trouve à l'état éteint, amener l'émetteur/récepteur (13b) pour le deuxième système radioélectrique (220) de nouveau dans le mode de repos ou dans l'état éteint par le biais de l'une ou des plusieurs interfaces (12) et vérifier à nouveau une disponibilité de services de transmission de données dans le deuxième système radioélectrique (220) à un moment ultérieur et autoriser la transmission de données si des services de transmission de données sont disponibles par le biais du deuxième système radioélectrique (220).

8. Arrangement (10) selon la revendication 7, le module de contrôle (14) étant configuré pour sélectionner le moment ultérieur en se basant sur une période prédéfinie et/ou le module de contrôle (14) étant configuré pour sélectionner le moment ultérieur en se basant sur une information de disponibilité.

9. Arrangement (10) selon la revendication 8, qui comporte en outre un module de mémoire (16), le module de contrôle (14) étant configuré pour enregistrer par le biais du module de mémoire (16), en tant qu'information de disponibilité, une information à propos d'une disponibilité temporelle et/ou spatiale de la transmission de données dans le deuxième système radioélectrique (220).

10. Arrangement (10) selon l'une des revendications précédentes, le module de contrôle (14) étant configuré pour transmettre, par le biais du premier ou du deuxième système radioélectrique (210 ; 220), des informations à propos de l'état de la transmission de données à un composant de réseau (200).

11. Véhicule automobile (100), comportant au moins un émetteur/récepteur (13a) d'un premier système radioélectrique (210), au moins un émetteur/récepteur (13b) d'un deuxième système radioélectrique (220) ainsi qu'un arrangement (10) selon l'une des revendications précédentes.

12. Procédé de contrôle d'un trafic de données avec les composants d'un véhicule automobile (100) dans un véhicule automobile (100), comprenant les étapes suivantes, exécutées par une ou plusieurs interfaces (12) d'un arrangement de contrôle du trafic de données :
communication (32) avec au moins un émetteur/récepteur (13a) compris par le véhicule automobile d'un premier système radioélectrique (210) ;
communication (34) avec au moins un émetteur/récepteur (13b) compris par le véhicule automobile d'un deuxième système radioélectrique (220) ;
et comprenant également les étapes suivantes, exécutées par un module de contrôle de l'arrangement de contrôle du trafic de données :
réception (36), par le biais du premier système radioélectrique (210), d'une information à propos d'une transmission de données ;
provocation (38) de la transmission de données par le biais du deuxième système radioélectrique (220) ;
amenée de l'émetteur/récepteur (13a) du premier système radioélectrique (210) dans un état prêt à la réception et amenée de l'émetteur/récepteur (13b) du deuxième système radioélectrique (220) dans un mode de repos ou dans un état éteint dans un état éteint du véhicule automobile (100) ; et
surveillance d'un état de charge d'un accumulateur d'énergie (18) compris par le véhicule automobile dans l'état éteint du véhicule automobile (100) et amenée des émetteurs/récepteurs (13a ; 13b) dans un état prêt à la réception par le biais de l'une ou des plusieurs interfaces (12) lorsqu'une charge minimale est présente dans l'accumulateur d'énergie (18).
